# EUROPEAN PATENT APPLICATION

(11) **EP 2 927 800 A1**
(43) Date of publication of application: **07.10.2015**
(21) Application number: 15161060.7
(22) Date of filing: 26.03.2015
(51) Int. Cl.: G06F 3/12

(54) **INFORMATION PROCESSING APPARATUS, IMAGE FORMING APPARATUS, AND DOCUMENT MANAGEMENT SYSTEM**

(30) Priority: 31.03.2014 JP 2014071940
(71) Applicant: Kyocera Document Solutions Inc., Osaka-shi, Osaka 540-8585 (JP)
(72) Inventor: Okazaki, Yusuke, Osaka-shi, Osaka 540-8585 (JP)
(74) Representative: Plougmann & Vingtoft A/S

(57) **Abstract**

In an information processing apparatus (20, 35, 38), a storage control portion (21, 352) stores history information regarding printing of document data by a print control portion (35, 213), in a second storage portion (24, 38). A change determination portion (21, 353) determines whether the document data printed by the print control portion (35, 213) has been changed, on the basis of the history information. If it is determined that the document data printed by the print control portion (35, 213) has been changed, a content determination portion (21, 354) determines whether a content in a printing area of the document data at a time of printing by the print control portion (35, 213) has been changed, on the basis of the document data that has been changed and the document data at the time of printing by the print control portion (35, 213). If the content determination portion (21, 354) determines that the content in the printing area has been changed, a notification portion (21, 355) can notify of change of the document data.

## Description

### BACKGROUND

The present disclosure relates to an information processing apparatus and an image forming apparatus which are capable of using document data in a storage portion connected to a network, and a document management system and a document management method which manage the document data.

In general, a document management server is known which manages document data such that the document data can be shared on a network. With an information processing apparatus, such as a personal computer, which is connected to such a document management server in a communicable manner, for example, a user can view and edit document data managed by the document management server.

Here, a configuration is known in which, if edit requests for document data which are made to a document management server conflict with each other, an information processing apparatus that has made the edit request later is notified of end of edit in an information processing apparatus that has made the edit request earlier and has been permitted to edit the document data. In addition, a configuration is known in which a version of document data can be managed in a document management system.

### SUMMARY

An information processing apparatus according to one aspect of the present disclosure includes a print control portion, a storage control portion, a change determination portion, a content determination portion, and a notification portion. The print control portion is configured to execute a printing process of document data stored in a first storage portion connected via a network. The storage control portion is configured to store history information regarding printing of the document data by the print control portion, in a second storage portion. The change determination portion is configured to determine whether the document data printed by the print control portion has been changed, on the basis of the history information. The content determination portion is configured to, if the change determination portion determines that the document data printed by the print control portion has been changed, determine whether a content in a printing area of the document data at a time of printing by the print control portion has been changed, on the basis of the document data that has been changed and the document data at the time of printing by the print control portion. The notification portion is capable of notifying of change of the document data if the content determination portion determines that the content in the printing area has been changed.

An image forming apparatus according to another aspect of the present disclosure includes the above-described information processing apparatus and an image forming portion capable of executing the printing process on the basis of image data.

A document management system according to still another aspect of the present disclosure is a document management system including a document management server and an information processing apparatus. The document management system includes a first storage portion, a print control portion, a storage control portion, a change determination portion, a content determination portion, and a notification portion. The first storage portion is connected to a network. The print control portion is configured to execute a printing process of document data stored in the first storage portion connected via a network. The storage control portion is configured to store history information regarding printing of the document data by the print control portion, in a second storage portion. The change determination portion is configured to determine whether the document data printed by the print control portion has been changed, on the basis of the history information. The content determination portion is configured to, if the change determination portion determines that the document data printed by the print control portion has been changed, determine whether a content in a printing area of the document data at a time of printing by the print control portion has been changed, on the basis of the document data that has been changed and the document data at the time of printing by the print control portion. The notification portion is capable of notifying of change of the document data if the content determination portion determines that the content in the printing area has been changed.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a diagram showing a schematic configuration of a document management system according to an embodiment of the present disclosure.
FIG. 2 is a diagram showing the configuration of an image forming apparatus of the document management system according to the embodiment of the present disclosure.
FIG. 3 is a flowchart showing an example of a print job transmission process executed by a communication apparatus of the document management system according to the embodiment of the present disclosure.
FIG. 4 is a flowchart showing an example of a print job execution process executed by the image forming apparatus of the document management system according to the embodiment of the present disclosure.
FIG. 5 is a flowchart showing an example of a document update process executed by a document management server of the document management system according to the embodiment of the present disclosure.
FIG. 6 is a flowchart showing an example of a notification process executed by the image forming apparatus of the document management system according to the embodiment of the present disclosure.

### DETAILED DESCRIPTION

Hereinafter, an embodiment of the present disclosure will be described with reference to the accompanying drawings in order to allow understanding of the present disclosure. It should be noted that the following embodiment is an example embodying the present disclosure, and, by nature, does not limit the technical scope of the present disclosure.

### [Document Management System 100]

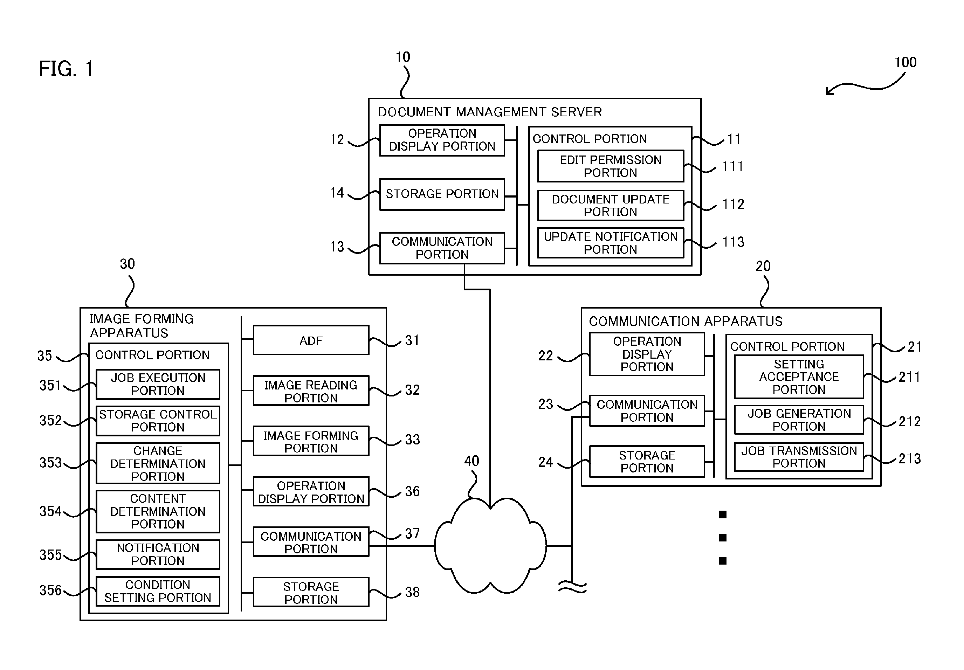

As shown in FIG. 1, a document management system 100 according to the embodiment of the present disclosure includes a document management server 10, one or a plurality of communication apparatuses 20, and an image forming apparatus 30. The document management server 10, the one or the plurality of communication apparatuses 20, and the image forming apparatus 30 are connectable to each other via a communication network 40 such as the Internet or a LAN.

### [Document Management Server 10]

As shown in FIG. 1, the document management server 10 is a server which includes a control portion 11, an operation display portion 12, a communication portion 13, and a storage portion 14.

The control portion 11 includes control devices such as a CPU, a ROM, a RAM, and an EEPROM which are not shown. The CPU is a processor which executes various calculation processes. The ROM is a non-volatile storage portion in which information such as a control program for causing the CPU to execute various processes is stored in advance. The RAM is a volatile storage portion, and the EEPROM is a non-volatile storage portion. The RAM and the EEPROM are used as temporary storage memories (working areas) for various processes executed by the CPU. The control portion 11 performs overall control of the document management server 10 by executing various control programs stored in advance in the ROM or the storage portion 14, with the CPU. It should be noted that the control portion 11 may be an electronic circuit such as an integrated circuit (ASIC).

The operation display portion 12 includes: a display portion, such as a liquid crystal display, which displays various kinds of information on the basis of control instructions from the control portion 11; and an operation portion, such as a keyboard and a mouse, which accepts various input operations performed by a user.

The communication portion 13 executes wired or wireless data communication with an external communication apparatus such as the communication apparatuses 20 and the image forming apparatus 30 via the communication network 40.

The storage portion 14 is a storage portion such as an SSD (solid-state drive) or an HDD (hard disk drive), and enables reading and writing of data to be performed therefrom and therein by the control portion 11. In addition, document data which is shared on the network 40 is stored in the storage portion 14. Specifically, an external communication apparatus, such as the communication apparatuses 20 and the image forming apparatus 30, which is connected to the network 40 is capable of using the document data stored in the storage portion 14, by accessing the document management server 10. It should be noted that the control portion 11 may permit only a previously registered external communication apparatus to use the document data stored in the storage portion 14. Here, the storage portion 14 is an example of a first storage portion in the present disclosure.

Here, the contents of the document data stored in the storage portion 14 may be changed by an external communication apparatus, such as the communication apparatuses 20 and the image forming apparatus 30, which is connected to the network 40. In contrast to this, in the document management server 10, if the contents of the document data are changed, version information added to the document data is updated, whereby an update state of the document data stored in the storage portion 14 is managed.

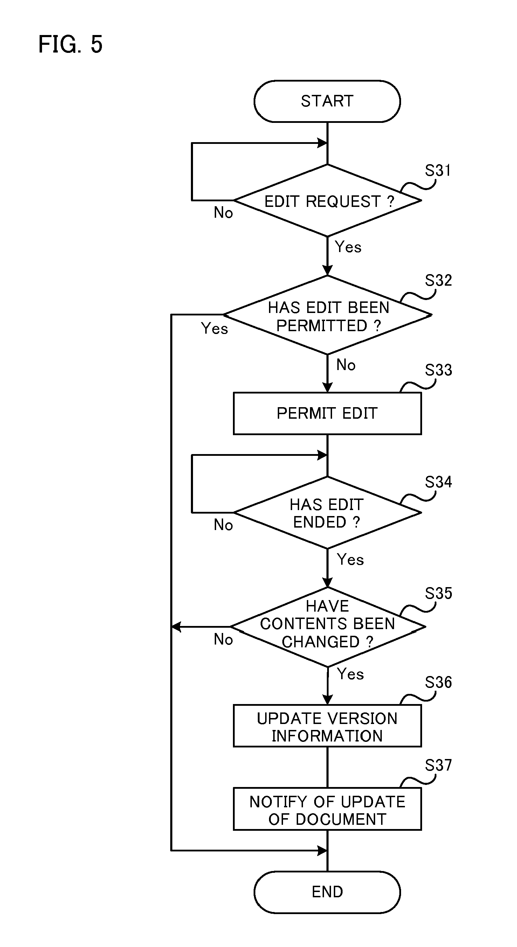

Specifically, a document update program for causing the control portion 11 to execute a later-described document update process (see a flowchart in FIG. 5) is stored in advance in the storage portion 14. The document update program may be stored in a computer-readable storage medium such as a CD, a DVD, or a flash memory, and may be installed from the storage medium into a storage portion such as the storage portion 14.

As shown in FIG. 1, the control portion 11 includes an edit permission portion 111, a document update portion 112, and an update notification portion 113. The control portion 11 functions as the edit permission portion 111, the document update portion 112, and the update notification portion 113 by executing the document update program stored in the storage portion 14, with the CPU.

The edit permission portion 111 permits edit of the document data stored in the storage portion 14, in accordance with a request from an external communication apparatus, such as the communication apparatuses 20 and the image forming apparatus 30, which is connected to the network 40. Specifically, regarding the document data for which an edit request has been received from an external communication apparatus such as the communication apparatuses 20, if another external communication apparatus has been permitted to edit the document data, the edit permission portion 111 permits the external communication apparatus that has made the request, to perform viewing of the document data. The external communication apparatus that is permitted by the edit permission portion 111 to perform viewing of the document data can perform viewing and printing of the contents of the document data.

On the other hand, regarding the document data for which an edit request has been received from an external communication apparatus such as the communication apparatuses 20, if no external communication apparatus has been permitted to edit the document data, the edit permission portion 111 permits the external communication apparatus that has made the request, to edit the document data. The external communication apparatus that is permitted by the edit permission portion 111 to edit the document data can change the contents of the document data and can store the document data the contents of which have been changed, in the storage portion 14, in addition to viewing and printing of the document data.

When the document data the contents of which have been changed by an external communication apparatus, such as the communication apparatuses 20, which is permitted by the edit permission portion 111 to edit the document data is stored in the storage portion 14, the document update portion 112 updates the version information added to the document data. For example, in the case where the version information is a number, the document update portion 112 updates the version information by increment. In addition, the version information may be a sign or a character such as an alphabet. It is also conceivable that the document update portion 112 updates the version information when edit of the document data is permitted by the edit permission portion 111.

Here, the document update portion 112 stores the document data the contents of which have been changed and the version information of which has been updated, as another file in the storage portion 14 without overwriting that document data on the document data before the contents are changed. That is, not only the latest version of the document data but also the old version of the document data are accumulated and stored in the storage portion 14 of the document management server 10. It is also conceivable that the document update portion 112 stores the document data in the storage portion 14, and then, after a preset time period elapses, the document update portion 112 deletes the document data.

When the document data is updated by the document update portion 112, the update notification portion 113 notifies external communication apparatuses, such as the communication apparatuses 20, which are connected to the network 40, of the update of the document data. It is conceivable that when the control portion 11 permits only a previously registered external communication apparatus to use the document data, the update notification portion 113 notifies only the external communication apparatus that is permitted to use the document data, of the update of the document data.

### [Communication Apparatuses 20]

As shown in FIG. 1, each communication apparatus 20 is a personal computer or the like which includes a control portion 21, an operation display portion 22, a communication portion 23, and a storage portion 24. Each communication apparatus 20 may be a smartphone, a mobile phone, a tablet terminal, a PDA, or the like.

The control portion 21 includes control devices such as a CPU, a ROM, a RAM, and an EEPROM which are not shown. The CPU is a processor which executes various calculation processes. The ROM is a non-volatile storage portion in which information such as a control program for causing the CPU to execute various processes is stored in advance. The RAM is a volatile storage portion, and the EEPROM is a non-volatile storage portion. The RAM and the EEPROM are used as temporary storage memories (working areas) for various processes executed by the CPU. The control portion 21 performs overall control of the communication apparatus 20 by executing various control programs stored in advance in the ROM or the storage portion 24, with the CPU. It should be noted that the control portion 21 may be an electronic circuit such as an integrated circuit (ASIC).

The operation display portion 22 includes: a display portion, such as a liquid crystal display, which displays various kinds of information on the basis of control instructions from the control portion 21; and an operation portion, such as a keyboard and a mouse, which accepts various input operations performed by a user.

The communication portion 23 executes wired or wireless data communication with an external communication apparatus such as the document management server 10, the other communication apparatuses 20, and the image forming apparatus 30 via the communication network 40.

The storage portion 24 is a storage portion such as an SSD or an HDD, and enables reading and writing of data to be performed therefrom and therein by the control portion 21. The document data acquired from the storage portion 14 of the document management server 10 may be stored in the storage portion 24. That is, in this case, the control portion 21 is capable of accessing the document management server 10, acquiring the document data from the storage portion 14, and storing the document data in the storage portion 24.

Here, with the communication apparatus 20, it is possible to access the document management server 10 and view or edit the document data stored in the storage portion 14. Furthermore, in the communication apparatus 20, it is possible to cause the image forming apparatus 30 to execute a print process on the document data being viewed, by transmitting print job information to the image forming apparatus 30.

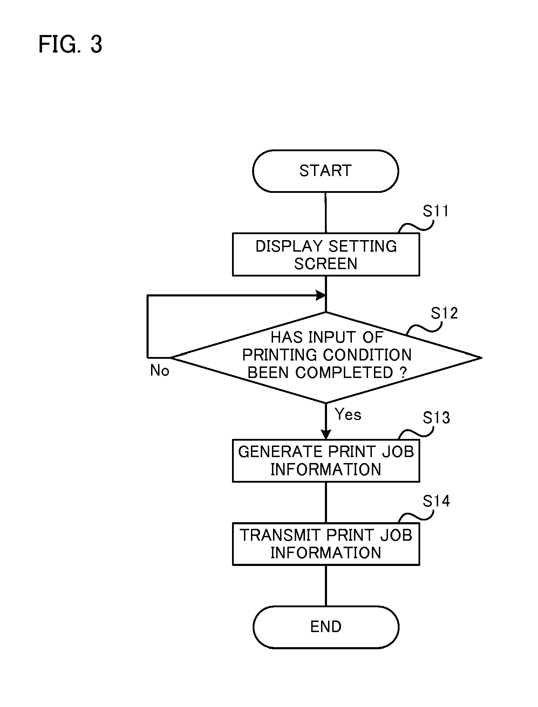

Specifically, a print job transmission program for causing the control portion 21 to execute a later-described print job transmission process (see a flowchart in FIG. 3) is stored in advance in the storage portion 24. The print job transmission program may be stored in a computer-readable storage medium such as a CD, a DVD, or a flash memory, and may be installed from the storage medium into a storage portion such as the storage portion 24.

As shown in FIG. 1, the control portion 21 includes a setting acceptance portion 211, a job generation portion 212, and a job transmission portion 213. The control portion 21 functions as the setting acceptance portion 211, the job generation portion 212, and the job transmission portion 213 by executing the print job transmission program stored in the storage portion 24, with the CPU.

The setting acceptance portion 211 accepts a setting operation for a printing condition performed by the user for the printing process to be executed by the image forming apparatus 30. Specifically, when an operation input indicating an instruction of printing by the image forming apparatus 30 for the document data being viewed is performed by the user on the operation display portion 22, the setting acceptance portion 211 displays, on the operation display portion 22, a setting screen for setting the printing condition. For example, the printing condition includes a printing area, the number of sheets to be printed, the size of print sheets, with/without enlargement/reduction, with/without double-sided printing, and the like.

The job generation portion 212 generates print job information for causing the image forming apparatus 30 to execute the printing process, on the basis of the printing condition accepted by the setting acceptance portion 211. For example, the job generation portion 212 generates the print job information on the basis of specific information for identifying the document data which is to be a target of the printing process; and information indicating the printing condition. Here, the specific information includes the name of the document data, current version information of the document data, information on the location of the document data in the document management server 10, and the like.

It is also conceivable that the communication apparatus 20 acquires the document data from the document management server 10 and generates the print job information on the basis of the acquired document data. In this case, the job generation portion 212 converts the data format of the document data which has been acquired from the document management server 10 and stored in the storage portion 24, to a data format suitable for the printing process in the image forming apparatus 30, such as PDL (page description language) format or bitmap format. The job generation portion 212 generates the print job information by adding the information indicating the printing condition, to the document data the data format of which has been converted.

The job transmission portion 213 transmits the print job information generated by the job generation portion 212, to the image forming apparatus 30.

### [Image Forming Apparatus 30]

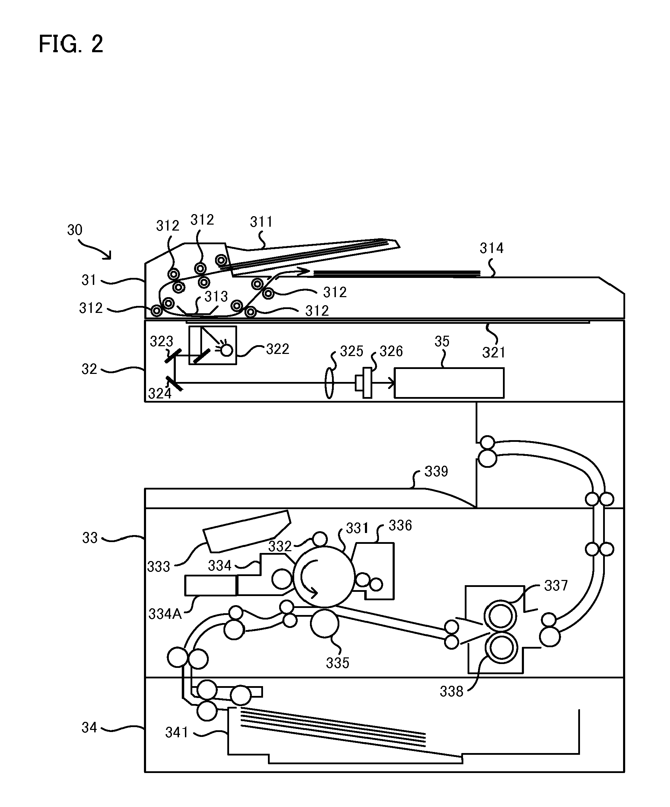

As shown in FIGS. 1 and 2, the image forming apparatus 30 includes an ADF 31, an image reading portion 32, an image forming portion 33, a sheet feed portion 34, a control portion 35, an operation display portion 36, a communication portion 37, and a storage portion 38. The image forming apparatus 30 is a multifunction peripheral which has a plurality of functions such as a printer function to form an image on the basis of image data as well as a scanning function, a facsimile function, a copy function, or the like. Here, an apparatus which includes the control portion 35 and the storage portion 38 is an example of an information processing apparatus in the present disclosure. It should be noted that the image forming apparatus 30 may be an image forming apparatus, such as a printer, which is capable of executing the printing process on the basis of the print job information transmitted from the communication apparatus 20.

As shown in FIG. 2, the ADF 31 is an automatic document feeder which includes a document set portion 311, a plurality of conveying rollers 312, a document holder 313, and a sheet discharge portion 314. In the ADF 31, by each conveying roller 312 being driven by a motor which is not shown, a document sheet placed on the document set portion 311 is conveyed through a reading position where image data is read by the image reading portion 32, to the sheet discharge portion 314. Accordingly, the image reading portion 32 can read image data from the document sheet being conveyed by the ADF 31.

As shown in FIG. 2, the image reading portion 32 includes a document table 321, a reading unit 322, a mirror 323, a mirror 324, an optical lens 325, and a CCD (Charge Coupled Device) 326. The document table 321 is a document placement portion provided at an upper surface of the image reading portion 32. The reading unit 322 includes an LED light source and a mirror and is movable in a sub-scanning direction (a right-left direction in FIG. 2) by a motor which is not shown. The LED light source includes a large number of white LEDs arranged along a main-scanning direction (a depth direction in FIG. 2). The mirror reflects light that has been emitted from the LED light source and reflected on a surface of a document sheet located at the reading position on the document table 321, toward the mirror 323. Then, the light reflected on the mirror of the reading unit 322 is guided by the mirror 323 and the mirror 324 to the optical lens 325. The optical lens 325 causes the light entering the optical lens 325 to be converged on and enter the CCD 326. The CCD 326 includes a photoelectric conversion element which inputs an electric signal corresponding to an amount of the light received from the optical lens 325, as image data of the document sheet to the control portion 35.

The image forming portion 33 is an electrophotographic type image forming portion capable of executing an image forming process (the printing process) of forming an image on the basis of image data read by the image reading portion 32. In addition, the image forming portion 33 is also capable of executing the printing process on the basis of image data inputted from an external communication apparatus such as the communication apparatuses 20.

Specifically, as shown in FIG. 2, the image forming portion 33 includes a photosensitive drum 331, a charging device 332, a laser scanning unit (LSU) 333, a developing device 334, a transfer roller 335, a cleaning device 336, a fixing roller 337, a pressure roller 338, and a sheet discharge tray 339. In the image forming portion 33, an image is formed through the following procedure on a paper sheet fed from a sheet feed cassette 341 which is detachably attached to the sheet feed portion 34, and the sheet on which the image has been formed is discharged to the sheet discharge tray 339. It should be noted that the sheet is a sheet material such as paper, coated paper, a postcard, an envelope, an OHP sheet, and the like.

First, the photosensitive drum 331 is uniformly charged at a predetermined potential by the charging device 332. Next, light based on the image data is applied to the surface of the photosensitive drum 331 by the laser scanning unit 333. Thus, an electrostatic latent image corresponding to the image data is formed on the surface of the photosensitive drum 331. Then, the electrostatic latent image on the photosensitive drum 331 is developed (visualized) as a toner image by the developing device 334. The developing device 334 is supplied with toner (a developer) from a toner container 334A which is detachably attached to the image forming portion 33. Subsequently, the toner image formed on the photosensitive drum 331 is transferred to the sheet by the transfer roller 335. Then, the toner image transferred to the sheet is heated and fused by the fixing roller 337, to be fixed on the sheet while the sheet passes between the fixing roller 337 and the pressure roller 338. The toner remaining on the surface of the photosensitive drum 331 is removed by the cleaning device 336.

The control portion 35 includes control devices such as a CPU, a ROM, a RAM, and an EEPROM which are not shown. The CPU is a processor which executes various calculation processes. The ROM is a non-volatile storage portion in which information such as a control program for causing the CPU to execute various processes is stored in advance. The RAM is a volatile storage portion, and the EEPROM is a non-volatile storage portion. The RAM and the EEPROM are used as temporary storage memories (working areas) for various processes executed by the CPU. The control portion 35 performs overall control of the image forming apparatus 30 by executing various control programs stored in advance in the ROM, with the CPU. It should be noted that the control portion 35 may be an electronic circuit such as an integrated circuit (ASIC) or may be a control portion provided independently of a main control portion which performs overall control of the image forming apparatus 30.

The operation display portion 36 includes: a display portion, such as a liquid crystal panel, which displays various kinds of information on the basis of control instructions from the control portion 35; and an operation portion, such as operation keys or a touch panel, which inputs various kinds of information to the control portion 35 in accordance with operations of the user.

The communication portion 37 executes wired or wireless data communication with an external communication apparatus such as the document management server 10 and the communication apparatuses 20 via the communication network 40.

The storage portion 38 is a storage portion such as an SSD or an HDD. The image data read by the image reading portion 32 is stored in the storage portion 38. In addition, the document data acquired from the storage portion 14 of the document management server 10 is stored in the storage portion 38. Specifically, the control portion 35 is capable of accessing the document management server 10, acquiring the document data from the storage portion 14, and storing the document data in the storage portion 38.

Incidentally, after document data managed by a document management server such as the document management server 10 is printed by the user of an information processing apparatus such as the communication apparatuses 20, the contents of the document data which has been printed may be changed by an edit operation performed by another user. In this case, it is considered that the user who has performed the printing of the document data often has an intense interest in the contents updated for the printed range after the printing. However, in order to confirm the posteriorly updated contents of the document data which has been printed by the user, the user needs to confirm an update state of the document data managed by the document management server, each time the confirmation is performed.

In contrast to this, in the document management system 100, since the image forming apparatus 30 has a function described below, the user who has printed the document data which is managed by the document management server 10 such that the document data can be shared, can easily confirm the contents of update performed posteriorly for the printed range.

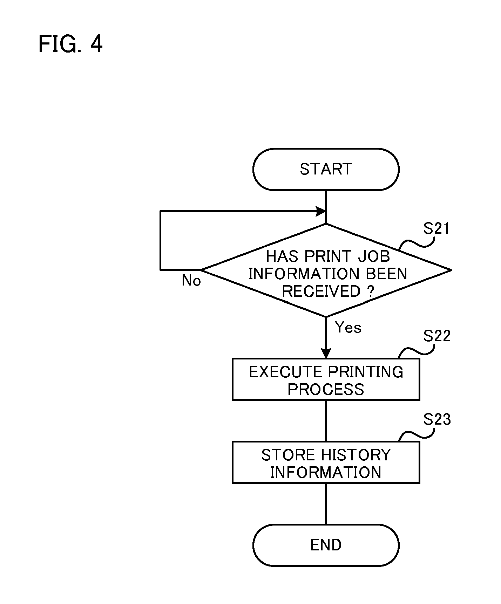

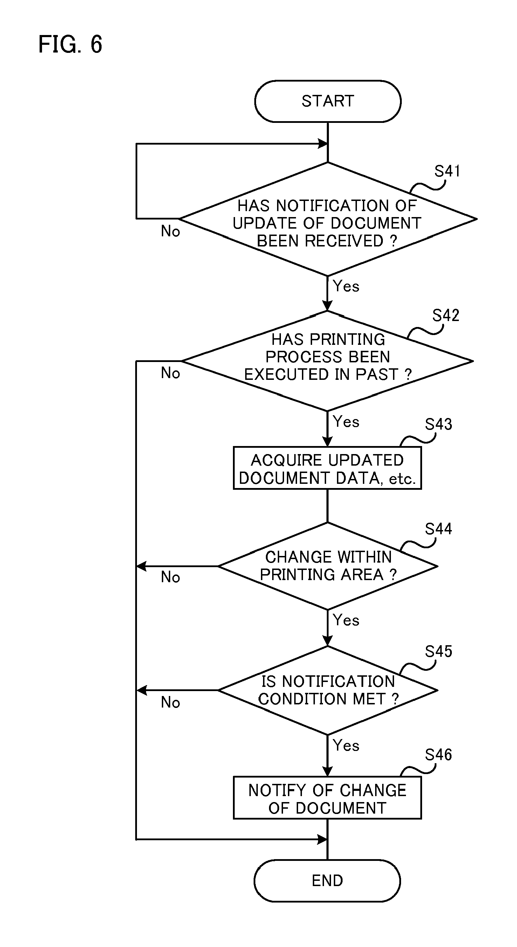

Specifically, a print job execution program for causing the CPU of the control portion 35 to execute a later-described print job execution process (see a flowchart in FIG. 4) and a notification program for causing the CPU of the control portion 35 to execute a later-described notification process (see a flowchart in FIG. 6) are stored in advance in the storage portion 38. The print job execution program and the notification program may be stored in a computer-readable storage medium such as a CD, a DVD, or a flash memory, and may be installed from the storage medium into a storage portion such as the storage portion 38.

As shown in FIG. 1, the control portion 35 includes a job execution portion 351, a storage control portion 352, a change determination portion 353, a content determination portion 354, a notification portion 355, and a condition setting portion 356. The control portion 35 functions as the job execution portion 351, the storage control portion 352, the change determination portion 353, the content determination portion 354, the notification portion 355, and the condition setting portion 356 by executing the print job execution program and the notification program stored in the storage portion 38, with the CPU. Here, the control portion 35 when functioning as the job execution portion 351 is an example of a print control portion in the present disclosure.

The job execution portion 351 causes the image forming portion 33 to execute the printing process, on the basis of the print job information transmitted from the communication apparatus 20. Specifically, the job execution portion 351 acquires the document data from the document management server 10 on the basis of the specific information included in the print job information. Subsequently, the job execution portion 351 converts the data format of the acquired document data to a data format suitable for the printing process such as bitmap format, and then causes the image forming portion 33 to execute the printing process. In addition, the job execution portion 351 causes the image forming portion 33 to execute the printing process, in accordance with the printing condition indicated by the print job information.

If the print job information transmitted from the communication apparatus 20 includes the document data, the job execution portion 351 converts the data format of the document data to a data format suitable for the printing process such as bitmap format, and then causes the image forming portion 33 to execute the printing process.

The storage control portion 352 stores history information regarding printing of the document data by the job execution portion 351, in the storage portion 38. For example, the history information includes the specific information, the printing area in the printing process, identification information of the communication apparatus 20 that has transmitted the print job information, and the like. Here, the storage portion 38 in which the history information is stored is an example of a second storage portion in the present disclosure.

The change determination portion 353 determines whether the document data that has been printed by the job execution portion 351 has been changed, on the basis of the history information stored in the storage portion 38. Specifically, when a notification of update of any of the document data managed by the document management server 10 is received from the document management server 10, the change determination portion 353 determines whether the updated document data is the document data that has been printed by the job execution portion 351, on the basis of the name of the document data included in the history information. Then, if it is determined that the updated document data is the document data that has been printed by the job execution portion 351, the change determination portion 353 determines that the document data that has been printed by the job execution portion 351 has been changed. That is, when the version information added to the document data has been updated in the document management server 10, the change determination portion 353 determines that the document data has been changed.

The change determination portion 353 may determine whether the document data that has been printed by the job execution portion 351 has been changed, by periodically confirming an update state of the document data in the document management server 10. In addition, it is also conceivable that in the document management server 10, an update state of the document data is not managed by using the version information. In this case, the change determination portion 353 can determine whether the document data has been changed, by using management information which is added to the document data in the document management server 10 and indicates last storing date and time and last update date and time, instead of the version information.

If the change determination portion 353 determines that the document data that has been printed by the job execution portion 351 has been changed, the content determination portion 354 determines whether the contents in the printing area of the document data at the time of printing by the job execution portion 351 have been changed, on the basis of the document data that has been changed and the document data at the time of printing by the job execution portion 351.

Specifically, the content determination portion 354 acquires the document data that has been changed, from the document management server 10. In addition, the content determination portion 354 acquires the version of the document data at the time of printing by the job execution portion 351 from the document management server 10 on the basis of the version information included in the history information. Then, the content determination portion 354 determines whether the contents in the printing area of the document data at the time of printing by the job execution portion 351 have been changed, by comparing the acquired two pieces of the document data for the printing area included in the history information.

In another embodiment, it is conceivable that the storage control portion 352 stores the document data that has been printed by the job execution portion 351, together with the history information in the storage portion 38. In this case, the content determination portion 354 suffices to acquire only the document data that has been updated, from the document management server 10. Furthermore, it is also conceivable that the update notification portion 113 of the document management server 10 not only notifies external communication apparatuses, such as the communication apparatuses 20, which are connected to the network, of update of the document data, but also transmits the document data that has been updated, to the external communication apparatuses. In this case, the content determination portion 354 does not need to acquire the document data from the document management server 10, and thus it is possible to simplify the process in the image forming apparatus 30.

Here, in the case where the printing area of the document data is designated on a page-by-page basis, the content determination portion 354 determines whether the contents have been changed, by comparing the contents of the two pieces of the document data on a page-by-page basis. Meanwhile, it is also conceivable that the printing area of the document data is designated on a line-by-line basis. In this case, it is conceivable that the content determination portion 354 determines whether the contents have been changed, by performing a character string search with the entirety of the document data that has been changed, being set as a search range and with a text at a line designated at the time of printing, being set as a search target. Thus, it is possible to determine whether the contents of the text at the line designated at the time of printing have been changed, even when a text corresponding to the text at the line designated at the time of printing is not present at the line designated at the time of printing in the document data that has been changed, due to an increase or decrease in the number of lines or the like which is caused by editing.

If the content determination portion 354 determines that the contents in the printing area have been changed, the notification portion 355 can notify of the change of the document data. Specifically, if the changed contents in the printing area of the document data at the time of printing by the job execution portion 351 meet a preset notification condition, the notification portion 355 notifies of the change of the document data. For example, the notification condition includes change of the titles of chapters, sections, and the like, change of diagrams, change of character color, or change of character size. Here, it is conceivable that regarding a diagram, the notification portion 355 determines whether the contents have been changed, by appropriately converting the data format of diagram data of a diagram included in the printing area and comparing the diagram data. In addition, the notification condition includes the number of changed characters being equal to or greater than a preset threshold. For example, the threshold is set as a ratio of characters changed in the printing area.

If the notification portion 355 determines the notification condition is met, the notification portion 355 identifies the communication apparatus 20 that is the transmission source of the print job information, on the basis of the identification information of the communication apparatus 20 included in the history information. Thereafter, the notification portion 355 notifies the identified communication apparatus 20 of the change of the document data by using a notification method such as e-mail. The notification portion 355 may notify a previously registered communication apparatus such as a mobile terminal corresponding to the communication apparatus 20, of the change of the document data.

The condition setting portion 356 is capable of setting the contents of the notification condition in accordance with a predetermined setting operation. Specifically, when an input operation indicating setting of the contents of the notification condition is performed by the user on the operation display portion 36, the condition setting portion 356 displays, on the operation display portion 36, a setting screen for setting the contents of the notification condition. For example, the user can make settings in the setting screen for setting the contents of the notification condition, such that the user is to be notified of change of the document data only when a title in the printing area has been changed. In addition, the user also can make settings such that change of the document data is to be notified when a title in the printing area has been changed or 30% or more of the characters in the printing area has been changed.

Hereinafter, the document update process executed by the document management server 10, the print job transmission process executed by the communication apparatus 20, and the print job execution process and the notification process executed by the image forming apparatus 30 in the document management system 100 will be described.

### [Print Job Transmission Process]

First, an example of a procedure of the print job transmission process executed by the control portion 21 in the communication apparatus 20 will be described with reference to FIG. 3. Here, steps S11, S12, ... represent numbers of process procedures (steps) to be executed by the control portion 12. The control portion 21 executes the print job transmission process when an operation input indicating an instruction of printing by the image forming apparatus 30 for the document data being viewed by accessing the document management server 10 is performed by the user of the communication apparatus 20 on the operation display portion 22.

When an operation input indicating an instruction of printing by the image forming apparatus 30 for the document data that is being edited and the version information of which has not been updated is performed on the operation display portion 22 in the communication apparatus 20, the document data that is a target of the printing process includes the contents before the edit. Thus, it is conceivable that when a request to acquire the document data in an edit-permitted state is received from the image forming apparatus 30, the control portion 11 of the document management server 10 notifies the communication apparatus 20 that the unedited document data is to be printed, so that it is made possible to select continuation or cancellation of the printing process in the communication apparatus 20.

### <Step S11>

First, in step S11, the control portion 21 displays, on the operation display portion 22, the setting screen for setting the printing condition for the document data. In the setting screen for setting the printing condition, the user can perform an input operation for the printing condition such as the printing area, the number of sheets to be printed, the size of print sheets, with/without enlargement/reduction, with/without double-sided printing, and the like. Here, the process in step S11 is executed by the setting acceptance portion 211 of the control portion 21.

### <Step S12>

In step S12, the control portion 21 determines whether an input operation for the printing condition performed by the user in the setting screen displayed on the operation display portion 22 in step S11 has been completed. For example, when an operation input indicating an instruction of transmission of the print job information has been performed by the user on the operation display portion 22, the control portion 21 determines that the input operation for the printing condition performed by the user has been completed.

Here, if the control portion 21 determines that the input operation for the printing condition performed by the user has been completed (Yes in S12), the control portion 21 advances the processing to step S13. In addition, if the input operation for the printing condition performed by the user has not been completed (No in S12), the control portion 21 waits in step S12 for completion of the input operation for the printing condition performed by the user.

### <Step S13>

In step S13, the control portion 21 generates the print job information on the basis of the printing condition set in the setting screen displayed in step S11. For example, the control portion 21 generates the print job information on the basis of the specific information and the information indicating the printing condition. Here, the process in step S13 is executed by the job generation portion 212 of the control portion 21.

### <Step S14>

In step S14, the control portion 21 transmits the print job information generated in step S13, to the image forming apparatus 30. Here, the process in step S14 is executed by the job transmission portion 213 of the control portion 21.

### [Print Job Execution Process]

Next, an example of a procedure of the print job execution process executed by the control portion 35 in the image forming apparatus 30 will be described with reference to FIG. 4.

### <Step S21>

First, in step S21, the control portion 35 determines whether the print job information transmitted from the communication apparatus 20 has been received.

Here, if the control portion 35 determines that the print job information transmitted from the communication apparatus 20 has been received (Yes in S21), the control portion 35 advances the processing to step S22. In addition, if the print job information transmitted from the communication apparatus 20 has not been received (No in S21), the control portion 35 waits in step S21 for reception of the print job information transmitted from the communication apparatus 20.

### <Step S22>

In step S22, the control portion 35 causes the image forming portion 33 to execute the printing process, on the basis of the print job information received in step S21. Specifically, the control portion 35 acquires the document data from the document management server 10 on the basis of the specific information included in the print job information. Subsequently, the control portion 35 converts the data format of the acquired document data to a data format suitable for the printing process such as bitmap format, and then causes the image forming portion 33 to execute the printing process. In addition, the control portion 35 causes the image forming portion 33 to execute the printing process, in accordance with the printing condition indicated by the print job information. Here, the process in step S22 is an example of a first step in the present disclosure, and is executed by the job execution portion 351 of the control portion 35.

### <Step S23>

In step S23, the control portion 35 stores, in the storage portion 38, the history information, regarding the printing of the document data in step S22, which includes the specific information, the printing area, the identification information of the communication apparatus 20 that has transmitted the print job information, and the like. Here, the process in step S23 is an example of a second step in the present disclosure, and is executed by the storage control portion 352 of the control portion 35.

### [Document Update Process]

Next, an example of a procedure of the document update process executed by the control portion 11 in the document management server 10 will be described with reference to FIG. 5.

### <Step S31>

First, in step S31, the control portion 11 determines whether an edit request for the document data stored in the storage portion 14 has been received from an external communication apparatus, such as the communication apparatuses 20 and the image forming apparatus 30, which is connected to the network 40.

Here, if the control portion 11 determines that an edit request for the document data has been received from an external communication apparatus such as the communication apparatuses 20 (Yes in S31), the control portion 11 advances the processing to step S32. In addition, if an edit request for the document data has not been received from an external communication apparatus (No in S31), the control portion 11 waits in step S31 for an edit request for the document data from an external communication apparatus.

### <Step S32>

In step S32, the control portion 11 determines whether another external communication apparatus has been permitted to edit the document data for which the edit request is determined in step S31 to have been received.

Here, if the control portion 11 determines that another external communication apparatus has been permitted to edit the document data for which the edit request has been received (Yes in S32), the control portion 11 permits the external communication apparatus, such as the communication apparatuses 20, which has made the edit request, to perform viewing of the document data, and ends the document update process. In this case, the external communication apparatus which is permitted by the control portion 11 to perform viewing of the document data can perform viewing and printing of the contents of the document data. In addition, if no other external communication apparatus is permitted to edit the document data for which the edit request has been received (No in S32), the control portion 11 advances the processing to step S33.

### <Step S33>

In step S33, the control portion 11 permits the external communication apparatus, such as the communication apparatuses 20, which has made the edit request for the document data, to edit the document data. In this case, the external communication apparatus which is permitted by the edit permission portion 111 to edit the document data can change the contents of the document data and can store the document data the contents of which have been changed, in the storage portion 14, in addition to viewing and printing of the document data. Here, the processes in steps S31 to S33 are executed by the edit permission portion 111 of the control portion 11.

### <Step S34>

In step S34, the control portion 11 determines whether edit of the document data by the external communication apparatus such as the communication apparatuses 20 has ended. For example, the control portion 11 determines that the edit of the document data has ended, when storing the currently edited document data in the storage portion 14 is instructed by the external communication apparatus such as the communication apparatuses 20.

Here, if the control portion 11 determines that the edit of the document data by the external communication apparatus such as the communication apparatuses 20 has ended (Yes in S34), the control portion 11 cancels the permission for editing the document data and advances the processing to step S35. In addition, if the edit of the document data by the external communication apparatus such as the communication apparatuses 20 has not ended (No in S34), the control portion 11 waits in step S34 for end of the edit of the document data.

### <Step S35>

In step S35, the control portion 11 determines whether the contents of the document data have been changed by the external communication apparatus, such as the communication apparatuses 20, which is permitted in step S33 to edit the document data.

Here, if the control portion 11 determines that the contents of the document data have been changed by the external communication apparatus such as the communication apparatuses 20 (Yes in S35), the control portion 11 advances the processing to step S36. In addition, if the contents of the document data have not been changed by the external communication apparatus (No in S35), the control portion 11 ends the document update process.

### <Step S36>

In step S36, the control portion 11 updates the version information of the document data the contents of which are determined in step S35 to have been changed, and then stores the document data in the storage portion 14. For example, in the case where the version information is a number, the control portion 11 updates the version information by increment. Then, the control portion 11 stores the updated document data in the storage portion 14, in addition to the document data before the update. Thus, an external communication apparatus, such as the communication apparatuses 20, which accesses the document management server 10 can refer to the contents of an old version of the document data. Here, the processes in steps S35 and S36 are executed by the document update portion 112 of the control portion 11.

### <Step S37>

In step S37, regarding the document data the version information of which has been updated in step S36, the control portion 11 notifies external communication apparatuses, such as the communication apparatuses 20, which are connected to the network 40, of the update of the document data. Here, it is conceivable that the control portion 11 excludes the external communication apparatus, such as the communication apparatus 20, which has changed the contents of the document data, from targets to be notified of the update of the document data. Thus, ineffectively notifying the user who has changed the contents of the document data, of the update of the document data, is avoided.

As described above, in the document update process, when an edit request for the document data which another external communication apparatus has been already permitted to edit has been made by an external communication apparatus such as the communication apparatus 20, the external communication apparatus that has made the edit request is not permitted to edit the document data but is permitted to perform viewing of the document data. Thus, simultaneously changing the contents of the document data stored in the storage portion 14 by a plurality of external communication apparatuses is avoided.

In the document management server 10 in which the document update process is executed, the update state of the document data is managed by using the version information. Thus, the user who uses the document data managed by the document management server 10 can easily recognize the update state of the document data.

### [Notification Process]

Next, an example of a procedure of the notification process executed by the control portion 35 in the image forming apparatus 30 will be described with reference to FIG. 6.

### <Step S41>

In step S41, the control portion 35 determines whether a notification of update of the document data has been received from the document management server 10.

Here, if the control portion 35 determines that a notification of update of the document data has been received from the document management server 10 (Yes in S41), the control portion 35 advances the processing to step S42. In addition, if a notification of update of the document data has not been received from the document management server 10 (No in S41), the control portion 35 waits in step S41 for a notification of update of the document data from the document management server 10.

### <Step S42>

In step S42, the control portion 35 determines whether the document data the update of which has been notified in step S41 has been printed by the printing process in the past, on the basis of the name of the document data included in the history information stored in the storage portion 38. Here, the process in step S42 is an example of a third step in the present disclosure, and is executed by the change determination portion 353 of the control portion 35.

Here, if the control portion 35 determines that the printing process has been executed in the past on the document data the update of which has been notified (Yes in S42), the control portion 35 advances the processing to step S43. In addition, if the printing process has not been executed in the past on the document data the update of which has been notified (No in S42), the control portion 35 ends the notification process.

### <Step S43>

In step S43, the control portion 35 acquires the document data the update of which has been notified in the step S41 and a version of the document data at the time of the execution of the printing process from the document management server 10. As described above, in the notification process, in addition to the document data the update of which has been notified, the version of the document data at the time of the execution of the printing process is also acquired from the document management server 10. Thus, it is unnecessary to ensure, in the storage portion 38 of the image forming apparatus 30, a storage capacity for storing the version of the document data at the time of the execution of the printing process.

### <Step S44>

In step S44, the control portion 35 determines whether the contents in the printing area of the document data at the time of the execution of the printing process have been changed, by comparing the two pieces of the document data acquired in step S43 for the printing area included in the history information. For example, in the case where the printing area of the document data is designated on a page-by-page basis, the control portion 35 determines whether the contents have been changed, by comparing the contents of the two pieces of the document data on a page-by-page basis. In addition, in the case where the printing area of the document data is designated on a line-by-line basis, the control portion 35 determines whether the contents have been changed, by performing a character string search with the entirety of the document data that has been changed, being set as a search range and with a printed text being set as a search target. Here, the processes in step S43 and S44 are an example of a fourth step in the present disclosure, and are executed by the content determination portion 354 of the control portion 35.

Here, if the control portion 35 determines that the contents in the printing area of the document data at the time of the execution of the printing process have been changed (Yes in S44), the control portion 35 advances the processing to step S45. In addition, if the contents in the printing area of the document data at the time of the execution of the printing process have not been changed (No in S44), the control portion 35 ends the notification process.

### <Step S45>

In step S45, the control portion 35 determines whether the contents determined in step S44 to have been changed meet the notification condition. For example, in the case where the notification condition is set as change of a title or change of 30% or more of the characters in the printing area, the control portion 35 determines whether the contents determined in step S44 to have been changed meet this condition. Thus, only when a relatively important item of the document data has been changed, or only when the contents have been greatly changed, it is possible to notify of the change of the document data.

Here, if the control portion 35 determines that the changed contents meet the notification condition (Yes in S45), the control portion 35 advances the processing to step S46. In addition, if the changed contents do not meet the notification condition (No in S45), the control portion 35 ends the notification process.

In the image forming apparatus 30, it is possible to optionally set the contents of the notification condition by the user. Specifically, in the image forming apparatus 30, when an input operation indicating setting of the contents of the notification condition is performed by the user on the operation display portion 36, the control portion 35 displays, on the operation display portion 36, the setting screen for setting the contents of the notification condition. Thus, the user can avoid a notification which is against intention of the user, by setting the contents of the notification condition. Here, the process of displaying the setting screen for setting the contents of the notification condition is executed by the condition setting portion 356 of the control portion 35.

### <Step S46>

In step S46, the control portion 35 notifies the communication apparatus 20 that has transmitted in the past the print job information to cause the image forming apparatus 30 to execute the printing process for the document data that has been changed, of the change of the document data. For example, the control portion 35 identifies the communication apparatus 20 that transmitted the print job information, on the basis of the identification information of the communication apparatus 20 included in the history information, and transmits an e-mail to the identified communication apparatus 20, thereby notifying of the change of the document data. Here, the process in step S46 is an example of a fifth step in the present disclosure, and is executed by the notification portion 355 of the control portion 35.

As described above, in the notification process, when a notification of update of the document data on which the printing process has been executed by the image forming apparatus 30 has been received from the document management server 10, only if the contents in the printing area on which the printing process has been executed have been changed by the update, the change of the contents of the document data is notified of. Thus, the user who has printed the document data managed by the document management server 10 can easily confirm the contents of update performed posteriorly for the printed area.

### [Other Embodiments]

In another embodiment, it is conceivable that in the document management system 100 described above, instead of the control portion 35 of the image forming apparatus 30, the control portion 11 of the document management server 10 has a configuration corresponding to the storage control portion 352, the change determination portion 353, the content determination portion 354, the notification portion 355, and the condition setting portion 356. Thus, it is possible to simplify the configuration of the image forming apparatus 30.

It is also conceivable that in the document management system 100, instead of the control portion 35 of the image forming apparatus 30, the control portion 21 of the communication apparatus 20 has a configuration corresponding to the storage control portion 352, the change determination portion 353, the content determination portion 354, the notification portion 355, and the condition setting portion 356. In this case, the communication apparatus 20 which includes the control portion 21 and the storage portion 24 (another example of the second storage portion) is another example of the information processing apparatus in the present disclosure. In addition, the job transmission portion 213 of the control portion 21 is another example of the print control portion in the present disclosure. Even with such a configuration, it is possible to simplify the configuration of the image forming apparatus 30. Moreover, it is possible to distribute the processing load on the document management server 10 as compared to a configuration in which the document management server 10 includes the storage control portion 352 and the like.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An information processing apparatus (20, 35, 38) comprising:
a print control portion (35, 213) configured to execute a printing process of document data stored in a first storage portion (14) connected via a network;
a storage control portion (21, 352) configured to store history information regarding printing of the document data by the print control portion (35, 213), in a second storage portion (24, 38);
a change determination portion (21, 353) configured to determine whether the document data printed by the print control portion (35, 213) has been changed, on the basis of the history information;
a content determination portion (21, 354) configured to, if the change determination portion (21, 353) determines that the document data printed by the print control portion (35, 213) has been changed, determine whether a content in a printing area of the document data at a time of printing by the print control portion (35, 213) has been changed, on the basis of the document data that has been changed and the document data at the time of printing by the print control portion (35, 213); and
a notification portion (21, 355) capable of notifying of change of the document data if the content determination portion (21, 354) determines that the content in the printing area has been changed.

2. The information processing apparatus (20, 35, 38) according to claim 1, wherein the notification portion (21, 355) performs the notification if the changed content in the printing area of the document data at the time of printing by the print control portion (35, 213) meets a preset notification condition.

3. The information processing apparatus (20, 35, 38) according to claim 2, wherein the notification condition includes change of a title, a diagram, a character color, or a character size.

4. The information processing apparatus (20, 35, 38) according to claim 2 or 3, wherein the notification condition includes the number of changed characters being equal to or greater than a preset threshold.

5. The information processing apparatus (20,35, 38) according to any one of claims 2 to 4, further comprising a condition setting portion (21, 356) capable of setting a content of the notification condition in accordance with a predetermined setting operation.

6. The information processing apparatus (20, 35, 38) according to any one of claims 1 to 5, wherein the content determination portion (21, 354) acquires the document data that has been changed and the document data at the time of printing by the print control portion (35, 213) from the first storage portion (14), and determines whether the content in the printing area of the document data at the time of printing by the print control portion (35, 213) has been changed.

7. The information processing apparatus (20, 35, 38) according to any one of claims 1 to 6, wherein when version information added to the document data has been updated, the change determination portion (21, 353) determines that the document data has been changed.

8. An image forming apparatus (30) comprising:
the information processing apparatus (35, 38) according to any one of claims 1 to 7; and
an image forming portion (33) capable of executing the printing process on the basis of image data.

9. A document management system (100) including a document management server (10) and an information processing apparatus (35, 38), the document management system (100) comprising:
a first storage portion (14) connected to a network;
a print control portion (35, 213) configured to execute a printing process of document data stored in the first storage portion (14);
a storage control portion (21, 352) configured to store history information regarding printing of the document data by the print control portion (35, 213), in a second storage portion (24, 38);
a change determination portion (21, 353) configured to determine whether the document data printed by the print control portion (35, 213) has been changed, on the basis of the history information;
a content determination portion (21, 354) configured to, if the change determination portion (21, 353) determines that the document data printed by the print control portion (35, 213) has been changed, determine whether a content in a printing area of the document data at a time of printing by the print control portion (35, 213) has been changed, on the basis of the document data that has been changed and the document data at the time of printing by the print control portion (35, 213); and
a notification portion (21, 355) capable of notifying of change of the document data if the content determination portion (21, 354) determines that the content in the printing area has been changed.
